Europäisches Patentamt

European Patent Office

Office européen des brevets

(11) Veröffentlichungsnummer : **0 065 266**
**B1**

(19)

(12) **EUROPÄISCHE PATENTSCHRIFT**

(45) Veröffentlichungstag der Patentschrift :
12.11.86

(21) Anmeldenummer : 82104106.8

(22) Anmeldetag : 12.05.82

(51) Int. Cl.⁴ : **F 16 K   3/08**, F 16 K   1/32,
F 16 K 27/04, F 16 K 11/06

(54) **Ventiloberteil.**

(30) Priorität : 13.05.81 DK 2115/81

(43) Veröffentlichungstag der Anmeldung :
24.11.82 Patentblatt 82/47

(45) Bekanntmachung des Hinweises auf die Patenterteilung : 12.11.86 Patentblatt 86/46

(84) Benannte Vertragsstaaten :
AT CH DE FR GB IT LI NL SE

(56) Entgegenhaltungen :
EP-A- 0 003 459
EP-A- 0 015 600
EP-A- 0 035 056
DE-A- 2 349 131
DE-A- 2 349 772

(73) Patentinhaber : AKTIESELSKABET NORDISKE
KABEL-OG TRAADFABRIKER
La Cours Vej 7
DK-2000 Frederiksberg (DK)

(72) Erfinder : Madsen, Ole Erik
Horvej 27
Dk-8700 Horsens (DK)

(74) Vertreter : Abitz, Walter, Dr.-Ing. et al
Abitz, Morf, Gritschneder, Freiherr von Wittgenstein
Postfach 86 01 09
D-8000 München 86 (DE)

**Beschreibung**

Die Erfindung betrifft ein Ventiloberteil mit zwei keramischen Dichtscheiben für Sanitärarmaturen der im Oberbegriff des Anspruchs 1 angegebenen Gattung.

Aus EP-A-3 459 ist ein Ventiloberteil der vorstehend genannten Art bekannt, bei dem O-Ringdichtungen im Bereich der Ventilspindel ausgewechselt werden können, wenn eine Überwurfmutter von der Sanitärarmaturaufnahme gelöst und abgeschraubt wird. Wenn diese Überwurfmutter abgeschraubt ist und die O-Ringdichtungen zum Auswechseln zugänglich sind, sind die Ventilspindeln und die keramischen Dichtungsscheiben frei voneinander von dem Gehäuse lösbar, so daß beim Wiederzusammenbau die einzelnen Teile zuerst wieder ordnungsgemäß zueinander ausgerichtet werden müssen, was umständlich und zeitraubend ist. Auch können die keramischen Dichtungsscheiben aus dem Gehäuse fallen und beschädigt werden.

Keramische Scheiben sind ein sehr dichtes und haltbares Sperrmittel für Ventile, so daß einzig die O-Ringe auszuwechseln sind, wenn mit der Zeit an der Ventilspindel entlang Undichtigkeiten auftreten. Es ist allgemein bekannt, die keramischen Scheiben in einem Gehäuse anzuordnen. Diese Anordnung ist insofern unvorteilhaft als die Teile zum Auswechseln der O-Ringe aus dem Gehäuse entnommen werden müssen, was die Montierzeit verlängert und die Gefahr der Fehlmontage birgt, die zum Zerbrechen der keramischen Scheiben oder zu einer fehlerhaften Stellung derselben im Verhältnis zueinander führen kann.

Der letztgenannte Nachteil ist durch das aus der europäischen Patentanmeldung EP-A-15 600 bekannte Ventil behoben, das ein Gehäuse aufweist, durch welches verhindert wird, daß die Teile des Gehäuses beim Herausnehmen der Armatur aus dem Gehäuse herausfallen. Dieses bekannte Ventil hat jedoch den Mangel, daß das Gehäuse mittels eines Führungszapfens in der Armatur in bestimmter Weise orientiert werden muß, wobei es aufgrund einiger unten im Gehäuse vorgesehener Dichtungen schwierig ist, das Gehäuse bei der Montierarbeit in eine Stellung zu bringen, bei der der Führungszapfen korrekt eingreift. Ist dies nicht der Fall, wird das Gehäuse durch das Festschrauben einer Überwurfmutter schief belastet, wobei die keramischen Scheiben zerbrechen können. Der letztgenannte Stand der Technik ist die andere bekannte Ventile gleichfalls insofern nachteilig als das Auswechseln der Spindeldichtungen viel Zeit erfordert und mit der Gefahr von Fehlern verbunden ist, entweder weil die keramischen Scheiben aus dem Gehäuse herausgefallen sind, oder weil das Gehäuse zur korrekten Funktion in einer bestimmten Stellung in der Armatur anzuordnen ist.

Aus DE-A-2 349 131 ist ein auswechselbares Sitzventil oder Absperrventil bekannt. Als Grundbauteile hat dieses Ventil ein Gehäuse, eine Ventilspindel, einen Adapter oder Rotor, Ventilteile, ein Endteil mit zwei einstückigen Dichtungsringen und einer Scheibe. Die Ventilteile und der Rotor werden hierbei in das unten offene Gehäuse von unten her eingeschoben und von oben her wird die Ventilspindel durchgeführt. Schließlich wird der Endteil, der im zusammengebauten Zustand die Ventilteile enthält, fest mit dem unteren Ende des Gehäuses, beispielsweise durch Kleben, unlösbar fest verbunden. Wenn daher elastische Dichtungen des Ventils verschlissen sind, ist der gesamte Einsatz mit dem Gehäuse und dem Endteil sowie den darin angeordneten Ventilteilen auszuwechseln und wegzuwerfen. Auch hierbei ist das Gehäuse in einer vorbestimmten Stellung in der Sanitärarmatur anzuordnen, so daß sich hierbei im wesentlichen dieselben Schwierigkeiten wie bei der EP-A-15 600 ergeben.

Der Erfindung liegt die Aufgabe zugrunde, ein Ventiloberteil derart auszulegen, daß sich insbesondere die mit der Ventilspindel zusammenarbeitenden O-Ringe zur Verbesserung der Servicefreundlichkeit im Bedarfsfalle leicht auswechseln lassen, ohne daß die Gefahr einer Beschädigung der keramischen Scheiben zu befürchten ist.

Nach der Erfindung wird diese Aufgabe mit den im kennzeichnenden Teil des Anspruchs 1 angegebenen Merkmalen gelöst, durch die alle bisher bekannten Nachteile behoben werden, indem die keramischen Scheiben nicht aus dem Gehäuse herausfallen können, das so konstruiert ist, daß es ohne weiteres in die Armatur einführbar ist, ohne daß eine im voraus bestimmte gegenseitige Positionierung der Teile zu berücksichtigen ist.

Durch ein Kopfstück mit den im Anspruch 2 angegebenen Merkmalen wird erreicht, dass die O-Ringe ohne Entlastung der Armatur vom Wasserdruck auswechselbar sind.

Das Ventilgehäuse ist mit Vorteil aus Kunststoff herstellbar, wobei die im Anspruch 3 erwähnte Ausnehmung besonders einfach herstellbar ist, die in Verbindung mit dem Stift in der Gewindespindel deren Endstellungen definiert. In Kombination mit den im Anspruch 3 gekennzeichneten Mitnehmerorganen ergibt sich desweiteren der Vorteil, dass der Stift zur Entlastung bei Schlägen dient, die beispielsweise beim Aufschlagen eines Handgriffs auf die Spindel sonst auf die keramischen Scheiben übertragen würden.

Die im Anspruch 1 erwähnte gleichmässige Verteilung der Auslasslöcher im Gehäuse ist vorzugsweise gemäss Anspruch 4 erreichbar. Die Ausführungsform gemäss Anspruch 4 ist zur Herstellung des Gehäuses aus Kunststoff besonders gut geeignet.

Nachstehend werden an Hand der Zeichnung einige Ausführungsformen des erfindungsgemässen Ventileinsatzes beschrieben. Es zeigen

Figur 1    im Axialschnitt eine Ausführungsform des erfindungsgemässen Ventileinsatzes,

Figur 2    einen Schnitt nach der Linie II-II in Fig. 1, und

Figur 3 im Axialschnitt eine andere Ausführungsform des Ventileinsatzes.

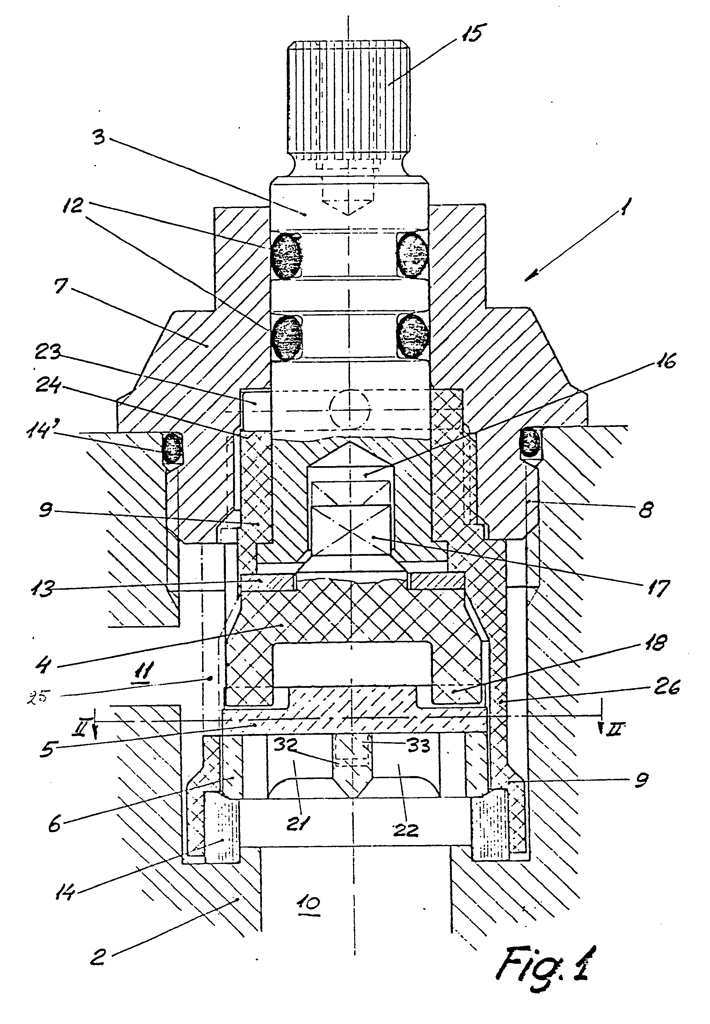

Fig. 1 zeigt einen in eine Armatur 2 eingeschraubten Ventileinsatz oder Ventiloberteil 1 mit einer Ventilspindel 3, die über einen Mitnehmer 4 eine keramische Scheibe 5 im Verhältnis zu einer anderen keramischen Scheibe 6 verdreht. Die genannten Teile werden erfindungsgemäss einerseits von einem als Überwurfmutter 7 ausgebildeteten, mittels eines Gewindes 8 in die Armatur 2 eingeschraubten Kopfstücks und andererseits von einem Gehäuse 9 umfasst, das bei der dargestellten Ausführungsform aus Kunststoff hergestellt ist. Wie weiter unten erläutert sind die keramischen Scheiben 5 und 6 zwischen einer offenen Stellung und einer auf der Zeichnung veranschaulichten Sperrstellung für eine Strömung, beispielsweise Frischwasser verdrehbar, das durch eine Öffnung 10 in den Ventileinsatz einströmt und durch eine Auslassöffnung 11 über der keramischen Scheibe 5 wieder abströmt. Die Auslassöffnung kann jedoch an anderer Stelle angeordnet und anders ausgebildet sein als dargestellt.

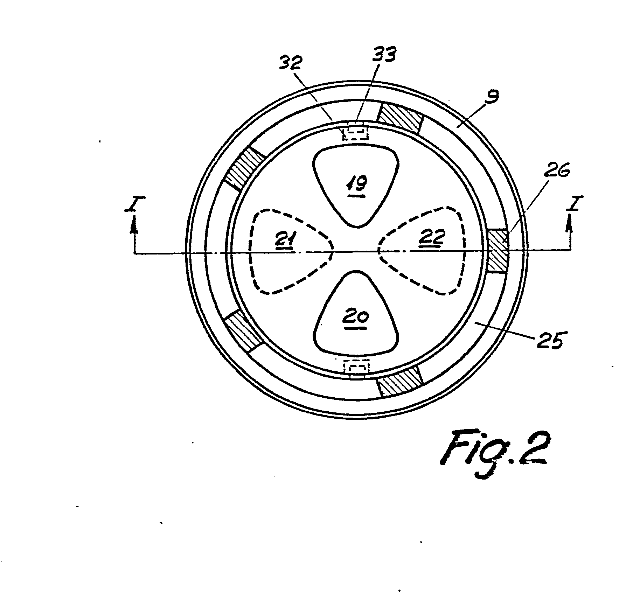

Nachstehend wird der Ventileinsatz an Hand der Fig. 1 und 2 eingehender beschrieben. Der Einsatz besteht aus einer vormontierten Einheit, indem durch den Boden des Ventilgehäuses in der angegebenen Reihenfolge die mit O-Ringen 12 versehene Ventilspindel 3, eine Druckscheibe 13, der Mitnehmer 4 sowie die keramischen Scheiben 5 und 6 eingeführt werden. Die keramische Scheibe 6 wird in eine Stellung gedreht, in der radial nach innen ragende Vorsprünge 33 am Gehäuse 9 in einer Ausnehmung 32 der Scheibe zu liegen kommen, und zwar derart, dass diese im Verhältnis zum Gehäuse 9 drehfest gehalten wird. Zuletzt wird ein Stoppring 14 in den Boden des Ventilgehäuses 9 eingepresst, wodurch die vorerwähnten Teile gegenseitig fixiert sind. Hiernach kann das Ventilgehäuse 9 in der Armatur 2 angeordnet und mittels der Überwurfmutter 7 befestigt werden, wodurch das Ventil teils mittels der O-Ringe 12 und teils mit Hilfe eines weiteren O-Rings 14' abgedichtet wird. Der Stoppring 14 dient als Dichtungsring zwischen der Armatur 2 und der keramischen Scheibe 6. Es ergibt sich hieraus, dass verschlissene O-Ringe 12 allein durch Abmontieren der Überwurfmutter 7 auswechselbar sind, ohne dass sich die übrigen Teile des Ventileinsatzes von einander lösen.

Das Ventil ist wie bereits erwähnt zwischen der offenen Stellung und der Sperrstellung verdrehbar, wozu normalerweise ein nicht dargestellter Handgriff auf eine Sternnut 15 am herausragenden Ende der Ventilspindel 3 aufgepresst ist. Das entgegengesetzte Spindelende ist mit einer viereckigen Ausnehmung 16 zur Aufnahme eines komplementären Zapfens 17 am Mitnehmer 4 ausgebildet, der in Nuten der keramischen Scheibe 5 eingreifende Vorsprünge 18 aufweist.

Fig. 2 zeigt gestrichelt zwei komplementäre Löcher 21 und 22 in der keramischen Scheibe 6. In Fig. 2 befindet sich das Ventil in seiner Sperrstellung. Durch Drehen der Ventilspindel werden die Löcher 19 und 20 in eine mit je einem der Löcher 21 und 22 fluchtende Stellung gebracht, was der offenen Ventilstellung entspricht. Die offene Stellung und die Sperrstellung werden durch einen von der Ventilspindel radial nach aussen ragenden Stift 23 definiert, den eine Ausnehmung 24 im Kopf des Ventilgehäuses 9 aufnimmt. Die Ausnehmung erstreckt sich bei der in Fig. 2 gezeigten Ausführungsform der keramischen Scheiben über einen Kreisbogen von 90°. Der Stift liegt am Boden der Ausnehmung 24 an, wodurch erreicht wird, dass ein Handgriff auf die Sternnut 15 aufgeschlagen werden kann, ohne dass sich die Schlagkraft bis zu den keramischen Scheiben 5 und 6 fortpflanzt, die dadurch zerstört werden könnten. Die keramischen Scheiben 5 und 6 sind ausserdem durch das freie Spiel zwischen der Ausnehmung 16 und dem Zapfen 17 sowie durch das Spiel zwischen den Vorsprüngen 18 und der keramischen Scheibe 5 gegen Überbeanspruchung gesichert, die ausserhalb der Vorsprünge 18 am Mitnehmer 4 eben anliegt. Bei in den Boden der Armatur 2 völlig eingeschraubter Überwurfmutter 7 beaufschlagt diese das Gehäuse 9 mit einem nach unten gerichteten Druck, und da das Gehäuse nicht auf dem Boden der Armatur ruht, wird der Druck über eine Druckscheibe 13, den Mitnehmer 4 und die keramischen Scheiben 5, 6 zum Zusammendrücken des Dichtungsrings 14 auf diesen übertragen, so dass das Ventil in seiner Sperrstellung gegen den Wasserdruck in der Öffnung 10 abgedichtet ist.

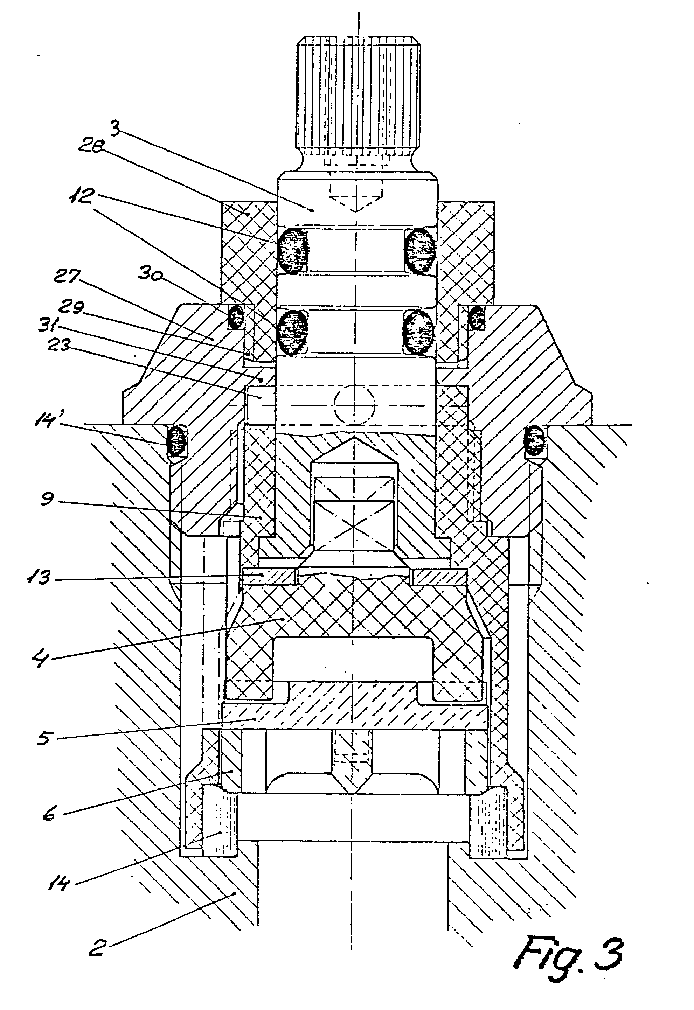

Um bei übermässiger Beaufschlagung der Ventilspindel 3 eine Versetzung der Positionen für die offene Ventilstellung und die Sperrstellung zu vermeiden, ist der Kopf des Ventilgehäuses 9 vorzugsweise vieleckig, beispielsweise sechseckig ausgebildet. Der vieleckige Gehäusekopf wirkt mit komplementären Ausnehmungen in der Überwurfmutter 7 zusammen. Sind beispielsweise bestimmte Grenzstellungen für den Handgriff bei jeweils offenem und geschlossenem Ventil erwünscht, kann es bei einer Ausführungsform mit einer Vierkantachse statt der Sternnut 15 erforderlich sein, im Gehäuse 9 eine mit der Öffnung 11 fluchtende Auslassöffnung vorzusehen. Diese Einschränkung der universellen Verwendung des Ventileinsatzes wird erfindungsgemäss durch eine Anzahl von Löchern 25 (in Fig. 2 sind insgesamt fünf Löcher vorgesehen) vermieden, die sich zwischen axialen Speichen 26 befinden, wodurch ein von der Winkelstellung des Ventilgehäuses 9 im Verhältnis zur Armatur 2 unabhängiger, im wesentlichen konstanter Strömungswiderstand des Ventils gewährleistet ist. Der Ventileinsatz ist somit für Armaturen mit über der keramischen Scheibe 5 beliebig angeordneter Auslassöffnung 11 verwendbar. In Fig. 3 liegt die Auslassöffnung nicht sichtbar hinter dem Mitnehmer.

Die in Fig. 3 dargestellte Ausführungsform des erfindungsgemässen Ventileinsatzes unterscheidet sich im übrigen von der in Fig. 1 gezeigten Ausführungsform lediglich dadurch, dass das Kopfstück aus zwei Teilen besteht, nämlich einem mit dem mit der Armatur zusammenwirkenden Gewinde versehenen Teil 27 und einem mittels eines Gewindes 29 in das Teil 27 einschraubbaren Teil 28, indem eine dichte Verbindung mit Hilfe eines O-Rings 30 gewährleistet ist. Erfindungsgemäss erstreckt sich das Kopfstückteil 28 in der Achsrichtung an den O-Ringen 12 vorbei. Das Kopfstückteil 28 weist einen an der Oberseite des Ventilgehäuses 9 anliegenden, radial einwärts gerichteten Flansch 31 auf. Bei der in Fig. 3 gezeigten Ausführungsform sind die O-Ringe 12 ohne Druckentlastung der Armatur vom Wasserdruck auswechselbar. Dies beruht darauf, dass der Ventileinsatz vom Kopfstückteil 27 gehalten wird, während zum Auswechseln der O-Ringe 12 lediglich das Kopfstückteil 28 demontiert werden muss.

Wenn auch das erfindungsgemässe Ventil hinsichtlich der Wartung eine wesentliche Verbesserung im Vergleich zu den bekannten Ventilen darstellt, ist es natürlich wünschenswert, das Ventil möglichst universell verwendbar zu gestalten. Dies ist dadurch erreichbar, dass beispielsweise nur zwei verschiedene Ventilgehäusegrössen hergestellt werden, wonach der Ventileinsatz einer grossen Anzahl unterschiedlicher Armaturen dadurch anpassbar ist, dass mehrere verschiedene Überwurfmuttern vorgesehen sind, die teils der Tiefe der Armaturöffnung und der Gewindeabmessung und teils der Form des gewünschten Handgriffs angepasst sind.

Die letztgenannten Parameter sind desweiteren von Bedeutung für die Länge der Ventilspindel. Ausserdem können Ventilspindeln mit verschiedenen Formen zum Abschluss beispielsweise der auf den Zeichnungsfiguren gezeigten Sternnut hergestellt werden.

## Patentansprüche

1. Ventiloberteil mit zwei keramischen Dichtscheiben für Sanitärarmaturen, das mit einem Gewinde (8) zum Einschrauben in die Sanitärarmatur (2) versehen ist, mit einem unten offenen Gehäuse (9), an dessen Umfang gleichmäßig verteilt Löcher (25) zur Fluidumströmung durch die Gehäuseseitenwand vorgesehen sind, wobei das Gehäuse (9) die keramischen Dichtscheiben (5, 6) enthält, die mittels einer Ventilspindel (3) zwischen einer die Fluidströmung absperrenden Stellung und einer offenen Stellung relativ zueinander verdrehbar sind, wobei das Gewinde (8) an einem als Überwurfmutter dienenden Kopfstück (7) ausgebildet ist, wobei das Kopfstück (7) zumindestens einen mit Dichtungsorganen (12), wie O-Ringen, versehenen Teil der Ventilspindel (3) aufnimmt, und mit einem Dichtungsring (14), der sich in seiner Gebrauchsstellung geringfügig über das untere Gehäuseende hinaus erstreckt und als Stoppring dient, dadurch gekennzeichnet, daß die Ventilspindel (3) die eine Dichtscheibe (5) über einen Mitnehmer (4) verdreht, daß das Ventiloberteil eine vormontierbare Einheit bildet, in dem von unten aus durch den offenen Boden des Gehäuses (9) aufeinanderfolgend wenigstens die Ventilspindel (3), der Mitnehmer (4) und die Dichtscheiben (5, 6) einführbar sind und der Dichtungsring (14) zum gegenseitigen Fixieren der Ventilteile im Gehäuse (9) einpreßbar ist, daß sich das Gehäuse (9) an seinem den keramischen Scheiben (5, 6) abgewandten oberen Teil über einen weisentlichen Teil seiner Länge längs der Ventilspindel (3) erstreckt und daß der Dichtungsring (14) zum fluiddichten Fixieren des Gehäuses (9) relativ zur Sanitärarmatur (2) unabhängig von der Winkeldrehung des Gehäuses (9) um seine Längsachse durch das Zusammenwirken des oberen Teils des Gehäuses (9) mit dem Kopfstück (9) gegen die Sanitärarmatur (2) gepreßt wird.

2. Ventiloberteil nach Anspruch 1, dadurch gekennzeichnet, daß das Kopfstück (2) zwei koaxiale, miteinander verspannbare Teile (27, 28) aufweist, daß das eine Kopfstückteil (27) das Gewinde trägt und einen radial einwärts gerichteten, zwischen den Dichtungsorganen (12) und dem Gehäuse am oberen Teil des Gehäuses (9) anliegenden Flansch (31) aufweist, und daß sich das andere Kopfstückteil (28) in axialer Richtung wenigstens über die Dichtungsorgane hinweg erstreckt.

3. Ventiloberteil nach Anspruch 1 oder 2, dessen Ventilspindel (3) einen radial nach außen ragenden Stift (23) zur Begrenzung der Ventilspindeldrehung aufweist, dadurch gekennzeichnet, daß in dem mit dem Kopfstück (7) zusammenarbeitenden oberen Teil des Gehäuses (9) eine Ausnehmung (24) vorgesehen ist, die eine Bogenlänge hat, die der Drehung der Ventilspindel (3) entspricht, daß der Mitnehmer (4) an seinem zur Ventilspindel (3) gerichteten Ende an einem radial einwärts gerichteten Vorsprung des Gehäuses (9) anliegt, und daß der Mitnehmer (4) mit der Ventilspindel (3) über Mitnehmerorgane (16, 17) unter Bildung eines axialen Freilaufs zusammenarbeitet, der größer als das axiale Spiel zwischen dem Kopfstück (7) und dem Bogen der Ausnehmung (24) ist.

4. Ventiloberteil nach einem der Ansprüche 1 bis 3, dadurch gekennzeichnet, daß die Löcher (25) in der Gehäuseseitenwand durch drei oder mehr axiale Speichen (26) begrenzt werden, die über den Gehäuseumfang gleichmäßig verteilt sind.

## Claims

1. An upper valve part comprising two ceramic sealing discs for sanitary fittings, which is provided with a thread (8) for screw-attachment to the sanitary fitting (2), a housing (body) (9) open at the bottom, on the circumference of which there are provided, uniformly distributed, holes (25) for the flow of fluid throught the sidewall of the body, the body (9) containing the ceramic sealing discs (5, 6), which are relatively rotatable by means of a valve stem (3) between a position blocking fluid flow and an open position, the thread (8) being formed on a head piece (7) serving as screw cap, the head piece (7) receiving at least one part of the valve stem (3), which part is provided with sealing members (12), such as O-rings, and a gasket (14), which in its position of use extends slightly beyond the bottom end of the body and serves as stop ring, characterized in that said valve stem (3) rotates the one sealing disc (5) through a follower (4), in that the upper valve part forms a unit adapted to be pre-assembled, in which, successively, at least said valve stem (3), said follower (4) and said sealing discs (5, 6) are adapted to be inserted from below through the open bottom of said body (9) and said gasket (14) is adapted to be pressed in for relative fixation of the valve parts in the body (9), in that said body (9) at its upper part facing away from said ceramic discs (5, 6) extends over a substantial portion of its length longitudinally of said valve stem (3), and in that said gasket (14) is, for fluid-tight fixation of the body (9) relative to said sanitary fitting (2), urged against said fitting (2), irrespective of the angular rotation of said body (9) about its longitudinal axis, through the interaction of the upper part of said body (9) with said head piece (9).

2. An upper valve part according to claim 1, characterized in that said head piece (2) includes two coaxial parts (27, 28) adapted to be braced together, in that the one head piece part (27) carries the thread and includes a radially inwardly directed flange (31) engaging between the sealing members (12) and the body at the upper part of said body (9), and in that the other head piece part (28) extends in axial direction at least over the sealing members.

3. An upper valve part according to claim 1 or 2, whose valve stem (3) includes a radially outwardly extending pin (23) for limiting the valve stem rotation, characterized in that there is provided in the upper part of said body (9) interacting with said head piece (7) a recess (24) having an arc length, which corresponds to the rotation of said valve stem (3), in that said follower (4) at its end facing toward said valve stem (3) engages a radially inwardly directed projection of said body (9), and in that said follower (4) interacts with said valve stem (3) through follower members (16, 17) under formation of an axial free-run (freewheeling) that is greater than the axial clearance between head piece (7) and the arc of the recess (24).

4. An upper valve part according to any one of claims 1 to 3, characterized in that the holes (25) in the sidewall of the body are confined by three or more axial spokes (26) distributed uniformly on the circumference of the body.

**Revendications**

1. Cartouche de robinet, avec deux rondelles d'étanchéité céramiques pour robinets sanitaires, laquelle est pourvue d'un filetage (8) permettant un vissage dans le robinet sanitaire (2), avec une cage (9), ouverte vers le bas, sur la périphérie de laquelle sont prévus, uniformément répartis, des trous (25) permettant l'écoulement du fluide par la paroi latérale de la cage, la cage (9) contenant les rondelles d'étanchéité céramiques (5, 6), lesquelles peuvent, par l'intermédiaire d'une tige (3), tourner l'une par rapport à l'autre entre une position obturant l'écoulement du fluide et une position ouverte, le filetage (8) étant réalisé sur une pièce de tête (7) servant d'écrou d'accouplement, la pièce de tête (7) recevant au moins une partie de la tige (3), pourvue d'organes d'étanchéité (12), par exemple de joints toriques, et avec une bague d'étanchéité (14), qui s'étend, dans sa position d'utilisation, sur une faible distance au-delà de l'extrémité inférieure de la cage et sert de bague d'arrêt, caractérisée en ce que la tige (3) fait tourner l'une des rondelles d'étanchéité (5) par l'intermédiaire d'un taquet d'entraînement (4) ; que la cartouche de robinet forme une unité pouvant être soumise à un montage préliminaire, unité dans laquelle peuvent être insérés, à partir du bas, par le fond ouvert de la cage (9), successivement au moins la tige (3), le taquet d'entraînement (4) et les rondelles d'étanchéité (5, 6), et dans laquelle peut être enfoncée la bague d'étanchéité (14) pour assurer une fixation réciproque des parties du robinet dans la cage (9) ; que la cage (9) s'étend, pour ce qui est de sa partie supérieure, opposée aux rondelles céramiques (5, 6), et sur une partie importante de sa longueur, le long de la tige (3) ; et que la bague d'étanchéité (14), destinée à la fixation, étanche au fluide, de la cage (9) par rapport au robinet sanitaire (2), est pressée, indépendamment de l'angle de rotation de la cage (9) autour de son axe longitudinal, contre le robinet sanitaire (2) sous l'action combinée de la partie supérieure de la cage (9) et de la pièce de tête (7).

2. Cartouche de robinet selon la revendication 1, caractérisée en ce que la pièce de tête (2) possède deux pièces (27, 28) coaxiales, pouvant être serrées l'une grâce à l'autre ; que l'une des parties (27) de la pièce de tête porte le filetage et présente une collerette (31), dirigée radialement vers l'intérieur, s'appuyant entre les organes d'étanchéité (12) et la cage contre la partie supérieure de la cage (9) ; et que l'autre partie (28) de la pièce de tête s'étend, dans le sens axial, au moins sur les organes d'étanchéité.

3. Cartouche de robinet selon les revendications 1 ou 2, dont la tige (3) présente un arbre (23), dépassant radialement vers l'extérieur, et destiné à limiter la rotation de la tige, caractérisée en ce qu'il est prévu dans la partie supérieure de la cage (9), en coopération avec la pièce de tête (7), un évidement (24) qui a une longueur d'arc correspondant à la rotation de la tige (3) ; que le taquet d'entraînement (4) s'appuie, en son extrémité dirigée vers la tige (3), contre une saillie, dirigée radialement vers l'intérieur, de la cage (9) ; et que le taquet d'entraînement (4) coopère avec la tige (3) par l'intermédiaire d'organes d'entraînement (16, 17) en formant une course libre axiale, laquelle est supérieure au jeu axial entre la pièce de tête (7) et l'arc de l'évidement (24).

4. Cartouche de robinet selon l'une des revendications 1 à 3, caractérisée en ce que les trous (25) aménagés dans la paroi latérale de la cage sont limités par au moins trois rayons axiaux (26), uniformément répartis sur la périphérie de la cage.

0 065 266

Fig. 1

Fig.2

Fig. 3

0 065 266